# EUROPÄISCHE PATENTSCHRIFT

(11) **EP 3 847 431 B1**
(45) Veröffentlichungstag und Bekanntmachung des Hinweises auf die Patenterteilung: **03.07.2024**
(21) Anmeldenummer: 19753074.4
(22) Anmeldetag: 13.08.2019
(51) Int. Cl.: G01K 1/12, G01K 15/00

(54) **MESSEINSATZ MIT ZUSTANDSÜBERWACHUNG**
MEASURING INSERT WITH STATE MONITORING
INSERT DE MESURE AVEC SURVEILLANCE DE L'ÉTAT

(30) Priorität: 04.09.2018 DE 102018121494
(43) Veröffentlichungstag der Anmeldung: 14.07.2021
(73) Patentinhaber: Endress+Hauser Wetzer GmbH+Co. KG, 87484 Nesselwang (DE)
(72) Erfinder: SCHALLES, Marc, 99097 Erfurt (DE); FRÖHLICH, Thomas, 98693 Illmenau (DE)
(74) Vertreter: Koslowski, Christine Adelheid
(86) Internationale Anmeldenummer: PCT/EP2019/071651
(87) Internationale Veröffentlichungsnummer: WO 2020/048743

(56) Entgegenhaltungen:
- DE-A1-102006 031 905
- DE-A1-102012 112 575
- GB-A- 2 011 169
- US-B2- 8 308 356

## Beschreibung

Die Erfindung bezieht sich auf eine Vorrichtung zur Bestimmung und/oder Überwachung einer Prozessgröße eines Mediums umfassend zumindest ein in einem Sensorkopf angeordnetes Sensorelement zur Bestimmung und/oder Überwachung der Prozessgröße. Ferner betrifft die Erfindung ein Verfahren zur Zustandsüberwachung einer erfindungsgemäßen Vorrichtung.

Feldgeräte dienen der Überwachung und/oder Bestimmung von, insbesondere chemischen oder physikalischen, Prozessgrößen eines Mediums. Im Rahmen der vorliegenden Anmeldung werden im Prinzip alle Messgeräte als Feldgerät bezeichnet werden, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von Firmen der Endress + Hauser-Gruppe hergestellt und vertrieben.

Beispiele für derartige Feldgeräte sind Füllstandsmessgeräte, Durchflussmessgeräte, Druck- und Temperaturmessgeräte, pH- und/oder pH-Redoxpotentialmessgeräte, oder auch Leitfähigkeitsmessgeräte, welche der Erfassung der jeweils entsprechenden Prozessgrößen Füllstand, Durchfluss, Druck, Temperatur, pH-Wert, Redoxpotential, oder Leitfähigkeit dienen. Die jeweils zugrundeliegenden Messprinzipien sind aus dem Stand der Technik hinlänglich bekannt, und werden an dieser Stelle nicht einzeln angeführt.

Bei Durchflussmessgeräten handelt es sich insbesondere um Coriolis-, Ultraschall-, Vortex-, thermische und/oder magnetisch induktiven Durchflussmessgeräte. Füllstandsmessgeräte wiederum sind insbesondere Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, konduktive Füllstandsmessgeräte und/oder temperatursensitive Füllstandsmessgeräte ausgestaltet. Bei Druckmessgeräten dagegen handelt es sich bevorzugt um sogenannte Absolut-, Relativ- oder Differenzdruckgeräte, während ein Temperaturmessgerät beispielsweise ein Thermoelement oder einen temperaturabhängigen Widerstand zur Ermittlung der Temperatur aufweist.

Ein Feldgerät umfasst zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Üblicherweise sind Feldgeräte nur für bestimmte, vorgebbare Einsatzbereiche, insbesondere hinsichtlich verschiedener Umgebungsparameter, ausgelegt. Besonders wichtig ist in diesem Zusammenhang die Temperatur. Für ein Feldgerät wird üblicherweise ein bestimmter Temperaturbereich definiert, innerhalb welchem das Feldgerät eingesetzt werden kann. Wird das Feldgerät beispielsweise bei zu hohen Einsatztemperaturen verwendet, so kann es zu Defekten bis hin zu einem Totalausfall an dem jeweiligen Feldgerät kommen. Ob ein Feldgerät über einen gewissen Zeitraum zu hohen Temperaturen ausgesetzt war, lässt sich in vielen Fällen jedoch nicht auf einfache Art und Weise detektieren.

In dieser Hinsicht ist beispielsweise aus der DE102006031905A1 eine Vorrichtung zur Bestimmung und/oder Überwachung zumindest einer Prozessgröße eines Mediums mit einer Sensoreinheit, einem Gehäuse und einem Temperaturüberschreitungselement bekannt geworden. Das Temperaturüberschreitungselement wird in oder an dem Gehäuse angebracht und umfasst ein piezoelektrisches Element, wobei die Curie-Temperatur des piezoelektrischen Elements derartig gewählt ist, dass die Curie-Temperatur im Bereich einer Überwachungstemperatur der Vorrichtung liegt. Um herauszufinden, ob die Überwachungstemperatur überschritten wird, muss jedoch nachteilig das Temperaturüberschreitungselement vom Gehäuse entfernt werden, oder aber derart ausgestaltet werden, dass die Polarisation des Temperaturüberschreitungselements im eingebauten Zustand abfragbar ist. Dies erfordert eine spezielle Ausgestaltung des jeweiligen Messgeräts.

Aus der DE102005032134A1 ist ferner ein Feldgerät mit einer Impedanzmesseinheit zur Bestimmung des elektrischen Widerstands der Sensoreinheit und/oder der elektrischen Verbindung bekannt geworden. Auf diese Weise können Defekte der Sensoreinheit und/oder von elektrischen Verbindungselementen, beispielsweise Anschlussdrähte, erkannt werden. Hinsichtlich einer maximal zulässigen Betriebstemperatur des Feldgeräts lässt sich auf diese Weise jedoch erst dann eine Aussage treffen, wenn die Betriebstemperatur bereits zu einer Beschädigung der Sensoreinheit und/oder der elektrischen Verbindungselemente geführt hat.

Zudem sind aus dem Stand der Technik unterschiedlichste Temperaturschalter bekannte geworden, welche beispielsweise Bimetalle, oder auch Phasenübergänge vom festen in den flüssigen Aggregatzustand oder umgekehrt verwenden, um das Überschreiten eines bestimmten Werts für die Temperatur zu detektieren. Hierbei handelt es sich aber häufig um separate Sensoreinheiten, die zusammen mit dem jeweiligen Feldgerät implementiert werden müssen. Dies kann ggf. aufwendig sein.

Der vorliegenden Erfindung liegt deshalb die Aufgabe zugrunde eine Möglichkeit bereitzustellen, mit welcher auf einfache Art und Weise detektieren lässt, ob ein Feldgerät zu hohen Einsatztemperaturen ausgesetzt ist/war.

Diese Aufgabe wird gelöst durch die Vorrichtung nach Anspruch 1 und das Verfahren nach Anspruch 12.

Bei einem Phasenübergang in einem Material, welches Material in der festen Phase verbleibt, handelt es sich beispielsweise nach der Ehrenfestklassifikation um einen Phasenübergang zumindest zweiter Ordnung. Im Unterschied zu einem Phasenübergang erster Ordnung wird keine oder nur eine vernachlässigbare Menge latenter Wärme während des Phasenübergangs frei. Wenn keine oder nur eine vernachlässigbare Menge an latenter Wärme frei wird, kann - grundsätzlich und unabhängig von der gewählten Klassifikation für Phasenübergänge - unter anderem vorteilhaft gewährleistet werden, dass die mittels des Sensorelements gemessene Temperatur zum Zeitpunkt des Auftretens eines Phasenübergangs, nicht, insbesondere nicht durch frei werdende, latente Wärme, verfälscht wird.

In einer weiteren, heute deutlich gebräuchlicheren Klassifizierung von Phasenübergängen wird lediglich zwischen diskontinuierlichen (1. Ordnung) und kontinuierlichen (2. Ordnung) Phasenübergängen unterschieden [s. z. B. Lexikon der Physik, Spektrum Akademischer Verlag Heidelberg Berlin, Band 4 unter dem Stichwort "Phasenübergänge und andere kritische Phänomene]. Nach dieser Klassifikation wiederum lassen sich beispielsweise verschiedenen ferroelektrischen Materialien sowohl Phasenübergänge 1. als auch 2. Ordnung zuordnen, wobei in beiden Fällen das jeweilige Material, für das ein Phasenübergang stattfindet, während des Phasenübergangs in der festen Phase verbleibt.

Das Verbleiben in der festen Phase ist unabhängig von der gewählten Klassifikation eines Phasenübergangs für die vorliegende Erfindung bedeutend. Ein im festen Zustand verbleibendes Material ist mit Hinblick auf konstruktive Aspekte der Vorrichtung besonders vorteilhaft.

Der Füllstoff kann einerseits ausschließlich durch das zumindest eine Füllmaterial gegeben sein. Bei dem Füllstoff kann es sich aber beispielsweise auch um ein Gemisch aus dem zumindest einen Füllmaterial und zumindest einem weiteren Material, oder um ein Gemisch aus zumindest zwei unterschiedlichen Füllmaterialien handeln. Auch ist es denkbar, dass unterschiedliche Teilbereiche des Innenvolumens, in welchem das Sensorelement angeordnet ist, mit unterschiedlichen Füllstoffen und/oder Füllmaterialien gefüllt ist.

Jedes Füllmaterial weist einen oder mehrere Phasenübergänge bei jeweils einer vorgebbaren Phasenübergangstemperatur auf. Im Falle, dass eine Vorrichtung bereitgestellt werden soll, für die der Füllstoff zumindest zwei Phasenübergänge aufweist, kann dies entsprechend insbesondere durch Verwendung eines einzigen Füllmaterials mit mehreren Phasenübergängen bei unterschiedlichen Phasenübergangstemperaturen oder durch Verwendung mehrere Füllmaterialien, welche jeweils zumindest einen Phasenübergang bei sich voneinander unterscheidenden Phasenübergangstemperaturen aufweisen, erreicht werden.

In einer vorteilhaften Ausgestaltung ist die Vorrichtung dazu ausgestaltet zu detektieren, ob sich das Füllmaterial in dem ersten und/oder zweiten Phasenzustand befindet. Insbesondere umfasst die Vorrichtung eine Detektionseinheit, welche dazu ausgestaltet ist zu detektieren, ob sich das Füllmaterial in dem ersten und/oder zweiten Phasenzustand befindet. Es ist in dieser Hinsicht einerseits denkbar, dass kontinuierlich, sequentiell oder auch auf Bedarf, beispielsweise durch Initialisierung seitens des Bedienpersonals, detektiert wird, in welchem Phasenzustand sich das Füllmaterial befindet. Es ist aber ebenso denkbar, dass, insbesondere lediglich, ein Wechsel des Phasenzustands, insbesondere automatisch, detektierbar ist. Hierbei ist es wiederum sowohl denkbar, einen einzigen Wechsel zu detektieren, oder über die Betriebsdauer der Vorrichtung mehrere oder sämtliche Wechsel des Phasenzustands zu detektieren.

Ferner kann die Vorrichtung, insbesondere eine Elektronik der Vorrichtung, bzw. die Detektionseinheit dazu ausgestaltet sein, eine Meldung bezüglich des Phasenzustands des Füllmaterials oder bezüglich eines Wechsels des Phasenzustands des Füllmaterials auszugeben.

Eine Detektion des Phasenübergangs mittels einer Komponente der Vorrichtung ist jedoch keineswegs zwingend. Eine Detektionseinheit kann beispielsweise auch losgelöst vom Prozess und als eigenständige Einheit bereitgestellt werden. Insbesondere ist in diesem Falle denkbar, nachträglich, also nach Entfernen der Vorrichtung aus dem Prozess, zu überprüfen, ob, beispielsweise im Falle eines Defekts an der Sensoreinheit, die Vorrichtung einer zu hohen Temperatur ausgesetzt wurde. Es kann also bei der Analyse der Ursache für einen Defekt ggf. direkt festgestellt werden, ob die Ursache im Betreiben der Vorrichtung bei zu hohen Temperaturen liegt.

In einer Ausgestaltung der Vorrichtung handelt es sich bei dem Sensorelement um einen Temperatursensor, insbesondere umfassend ein Widerstandselement oder ein Thermoelement. Das Sensorelement ist bevorzugt über zumindest zwei Anschlussdrähte elektrisch kontaktiert, welche zumindest teilweise durch den das Sensorelement umgebenden Füllstoff geführt sind.

Wenn der Füllstoff elektrisch nicht leitend ist, können die zumindest zwei Anschlussdrähte ferner vermittels des Füllstoffs elektrisch voneinander isoliert werden.

Die Phasenübergangstemperatur kann beispielsweise so gewählt werden, dass sie einer für den jeweiligen Prozess, in welchem die Vorrichtung zum Einsatz kommt, oder einer jeweils für die Vorrichtung relevanten, vorgebbaren Temperatur entspricht.

Eine bevorzugte Ausgestaltung der Vorrichtung beinhaltet, dass das Füllmaterial derart gewählt ist, dass eine Phasenübergangstemperatur des Füllmaterials einer vorgebbaren maximalen Einsatztemperatur, insbesondere einer maximal zulässigen Einsatztemperatur, für die Vorrichtung, oder einer vorgebbaren minimalen Einsatztemperatur, insbesondere einer minimal zulässigen Einsatztemperatur, für die Vorrichtung entspricht. Die Phasenübergangstemperatur kann also entweder der maximal zulässigen Einsatztemperatur oder der minimal zulässigen Einsatztemperatur entsprechen. Sie kann aber auch etwas geringer oder höher als die maximal oder minimal zulässige Einsatztemperatur gewählt werden, um etwaige temperaturbedingte Schädigungen zu vermeiden. Im Falle einer maximal zulässigen Einsatztemperatur kann eine derartige Schädigung beispielsweise durch eine Überbeanspruchung der Vorrichtung gegeben sein. Der Temperaturabstand zwischen der maximal oder minimal zulässigen Einsatztemperatur und der Phasenübergangstemperatur kann insbesondere derart gewählt werden, dass ein Über- oder Unterschreiten sicher ausgeschlossen werden kann.

Es ist ferner von Vorteil, wenn die Vorrichtung, insbesondere die Detektionseinheit, dazu ausgestaltet ist, im Falle des Auftretens des ersten und/oder zweiten Phasenzustands des Füllmaterials eine Meldung darüber auszugeben, ob die vorgebbare maximale Einsatztemperatur für die Vorrichtung überschritten worden ist. Im Falle, dass der erste und/oder zweite Phasenzustand detektierbar sind, kann eine Meldung darüber, ob die vorgebbare maximale Einsatztemperatur überschritten wurde, anhand des Vorhandenseins des ersten oder zweiten Phasenzustands ermittelt werden. Im Falle, dass ein Wechsel des Phasenzustands detektierbar ist, kann eine Meldung darüber, ob die vorgebbare maximale Einsatztemperatur überschritten wurde, anhand des Wechsels des Phasenzustands ausgegeben werden.

In einer bevorzugten Ausgestaltung ändert sich bei dem Phasenübergang des Füllmaterials, insbesondere sprunghaft, eine charakteristische physikalische und/oder chemische Größe für das Füllmaterial, wobei die Vorrichtung, insbesondere die Detektionseinheit, dazu ausgestaltet ist, den ersten und/oder zweiten Phasenzustand anhand einer Änderung dieser Größe zu detektieren.

Bei dem Füllmaterial handelt es sich bevorzugt um ein ferroelektrisches Material, um ein ferromagnetisches Material, oder um einen Supraleiter, insbesondere einen HochtemperaturSupraleiter. Bei dem zumindest einen Phasenübergang handelt es sich entsprechend um einen Phasenübergang vom ferroelektrischen in den paraelektrischen Zustand oder umgekehrt, vom ferromagnetischen in den paramagnetischen Zustand oder vom supraleitenden Zustand in den normalleitenden Zustand oder umgekehrt.

Bei der Phasenübergangstemperatur kommt es grundsätzlich zu einer Änderung einer spezifischen Materialeigenschaft des Füllmaterials anhand deren ein bestimmter Phasenzustand des Füllmaterials ermittelt werden kann. Die materialspezifischen Änderungen sind für das gewählte Füllmaterial bekannt und können zur Detektion des Phasenzustands herangezogen werden.

Die charakteristische physikalische oder chemische Kenngröße kann beispielsweise durch eine dielektrische, elektrische, oder magnetische Eigenschaft des Materials, beispielsweise durch eine magnetische oder elektrische Polarisation oder Remanenz, durch eine Kapazität oder eine Induktivität, oder durch eine Kristallstruktur oder ein Volumen, gegeben sein.

Eine vorteilhafte Ausgestaltung beinhaltet, dass sich bei dem Phasenübergang des Füllmaterials die elektrische Leitfähigkeit des Füllmaterials ändert, wobei die Vorrichtung, insbesondere die Detektionseinheit, dazu ausgestaltet ist, den ersten und/oder zweiten Phasenzustand anhand einer Änderung der elektrischen Leitfähigkeit zu detektieren.

Es ist ferner von Vorteil, wenn die Vorrichtung, insbesondere die Detektionseinheit, dazu ausgestaltet ist, die Änderung der elektrischen Leitfähigkeit eines durch das Füllmaterial gebildeten Isolationswiderstands zu detektieren. Ein Isolationswiderstand lässt sich messtechnisch besonders einfach erfassen.

Gemäß der Erfindung, ist das Füllmaterial im ersten Phasenzustand ein elektrischer Isolator. In diesem Falle weist das Füllmaterial einen hohen Isolationswiderstand auf. Wenn das Füllmaterial bzw. der Füllstoff zumindest in einem Phasenzustand ein elektrischer Isolator ist, können ggf. aufwendige, separate Isolierungen von Komponenten der Sensoreinheit, insbesondere von zumindest teilweise durch den Füllstoff geführten Anschlussleitunen, entfallen.

Gleichzeitig ist es von Vorteil, wenn sich das Füllmaterial durch eine hohe thermische Leitfähigkeit auszeichnet. In einer Ausgestaltung ist die thermische Leitfähigkeit weiterhin eine Funktion der Temperatur. In diesem Falle kann das Auftreten eines Phasenübergangs anhand des dynamischen Verhaltens des Thermometers als Funktion der Temperatur, beispielsweise anhand einer Ansprechzeit der Vorrichtung, ermittelt werden.

Eine Ausgestaltung beinhaltet, dass das Füllmaterial im ersten Phasenzustand in Form eines Pulvers vorliegt. Unter den Begriff Pulver fällt im Rahmen der vorliegenden Anmeldung auch ein Pulver mit sehr geringer Teilchengröße, beispielsweise ein Puder oder auch Staub.

In einer besonders bevorzugten Ausgestaltung der Erfindung ist der Phasenübergang des Füllmaterials irreversibel. Bei einem irreversiblen Phasenübergang muss nur einmalig eine Änderung des Phasenzustands detektiert werden. Vorteilhaft kann eine passive Detektion der Änderung des Phasenzustands realisiert werden. Somit kann diese Ausgestaltung auf besonders einfache Art und Weise realisiert werden. Dies betrifft sowohl die Konstruktion, als auch die messtechnische Umsetzung.

Eine weitere besonders bevorzugte Ausgestaltung beinhaltet, dass es sich bei dem Füllmaterial um Diamant handelt. Diamant ist in einem ersten Phasenzustand ein elektrischer Isolator mit besonders hoher Wärmeleitfähigkeit. Insbesondere für ein Feldgerät in Form eines Thermometers ist dies von großem Vorteil. Bei der Phasenübergangstemperatur wird Diamant zu Graphit. Dieser Übergang geht mit einer Änderung der elektrischen Leitfähigkeit einher. Anhand der elektrischen Leitfähigkeit des Füllmaterials lässt sich für diese Ausgestaltung also der jeweilige Phasenzustand des Füllmaterials auf einfache Art und Weise detektieren.

Die der Erfindung zugrundliegende Aufgabe wird ferner gelöst durch ein Verfahren zur Zustandsüberwachung einer erfindungsgemäßen Vorrichtung zur Bestimmung und/oder Überwachung einer Prozessgröße eines Mediums, umfassend folgende Verfahrensschritte:
Detektieren ob sich das Füllmaterial in dem ersten und/oder zweiten Phasenzustand befindet, und
Ermitteln eines Zustandsindikators für die Vorrichtung, insbesondere anhand des ersten und/oder zweiten Phasenzustands.

In einer Ausgestaltung des Verfahrens wird der Zustandsindikator anhand zumindest einer, insbesondere sprunghaften, Änderung zumindest einer charakteristischen physikalischen und/oder chemischen Größe für das Füllmaterial ermittelt.

In einer weiteren Ausgestaltung des Verfahrens handelt es sich bei dem Zustandsindikator um eine Aussage über eine thermische Beanspruchung der Vorrichtung, insbesondere des Sensorelements. Die thermische Beanspruchung, insbesondere Überbeanspruchung, kann dabei auch ausschließlich in der Vergangenheit stattgefunden haben. In diesem Falle erlaubt das Verfahren einen Rückschluss auf eine nicht mehr vorhandene temperaturbedingte Überbeanspruchung. Dies kann beispielsweise bei der Analyse von Defekten der Vorrichtung nützlich sein.

Die in Zusammenhang mit der Vorrichtung erläuterten Ausgestaltungen lassen sich mutatis mutandis auch auf das erfindungsgemäße Verfahren anwenden und umgekehrt.

Die Erfindung wird anhand der nachfolgenden Figuren näher erläutert:
Fig. 1 zeigt eine schematische Darstellung eines Thermometers mit einem in einem Sensorkopf angeordneten Sensorelement nach Stand der Technik,
Fig. 2 zeigt eine schematische Darstellung eines erfindungsgemäßen Thermometers, und
Fig. 3 zeigt eine schematische Darstellung eines erfindungsgemäßen Thermometers mit Detektionseinheit, und
Fig. 4 zeigt schematisch zeitliche Verläufe einer charakteristischen Größe eines erfindungsgemäßen Füllmaterials unter Auftreten von Phasenübergängen.

In den Figuren sind gleiche Elemente jeweils mit den gleichen Bezugszeichen versehen. Die nachfolgende Beschreibung bezieht sich ohne Beschränkung der Allgemeinheit auf Feldgeräte in Form von Thermometern. Die jeweiligen Sensorelemente umfassen ebenfalls ohne Beschränkung der Allgemeinheit jeweils ein über zwei Anschlussdrähte kontaktiertes Widerstandselement.

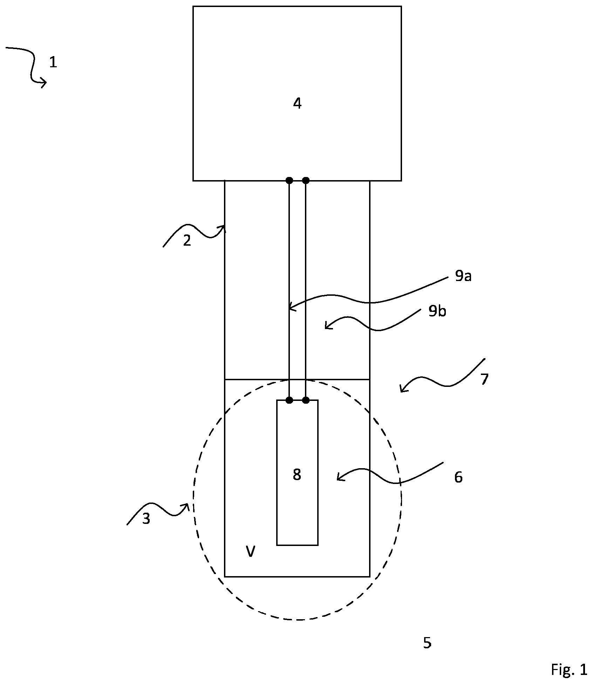

In Fig.1 ist eine schematische Abbildung eines Thermometers 1 mit einem Schutzrohr 2 und einer Elektronik 4 gemäß dem Stand der Technik gezeigt. Der dem jeweiligen Medium 5 zugewandte Teilbereich des Schutzrohres 2 wird auch als Sensorkopf 3 bezeichnet. Ein Teilbereich des Innenvolumens V des Sensorkopfes 3 ist mit einem Füllstoff 6, beispielsweise einem Keramikverguss, gefüllt. Ferner ist im Innenvolumen V des Sensorkopfes 3 ein Sensorelement 7 angeordnet, welches in der gezeigten Ausführung einen Temperatursensor 8 in Form eines Widerstandselements, und zwei Anschlussdrähte 9a, 9b zur elektrischen Kontaktierung mit der Elektronikeinheit 5, umfasst. Der Temperatursensor 7 sowie ein Teilabschnitt der Anschlussdrähte 9a,9b sind durch den Füllstoff 6 innerhalb des Volumens V des Sensorkopfes 3 eingeschlossen und/oder gekapselt. Dies führt zu einer besonders hohen mechanischen Stabilität und Vibrationsfestigkeit des Thermometers 1.

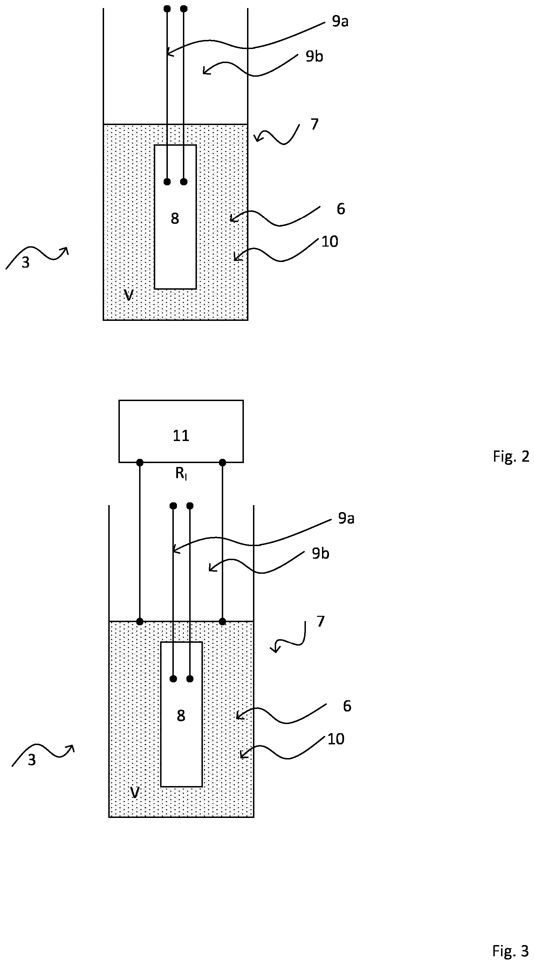

Erfindungsgemäß umfasst der Füllstoff 6 ein Füllmaterial 10, für welches bei einer vorgebbaren Phasenübergangstemperatur T_{P} einen Phasenübergang auftritt, für welchen Phasenübergang das Material in der festen Phase verbleibt, wie beispielshaft in Fig. 2 gezeigt. Die Phasenübergangstemperatur T_{P} des Füllmaterials 10 ist dabei so gewählt, dass sie einer vorgebbaren maximalen Einsatztemperatur für die Vorrichtung 1, bzw. für zumindest eine Komponente der Vorrichtung 1, beispielsweise des Sensorelements 8, entspricht. Das Füllmaterial 10 befindet sich in einem ersten Phasenzustand P₁, falls eine Temperatur T des Füllmaterials 10 kleiner als die Phasenüberganstemperatur T_{P} ist, und in einem zweiten Phasenzustand P₂, falls die Temperatur T des Füllmaterials 10 größer als die Phasenüberganstemperatur T_{P} ist.

Gemäß Fig. 2 ist der Füllstoff 6 vollständig durch das Füllmaterial 10 gegeben. In anderen Ausgestaltungen kann es sich bei dem Füllstoff 6 aber auch um ein Gemisch aus dem Füllmaterial 10 und zumindest einem weiteren Material handeln. Ebenso ist es denkbar, einen ersten Teilbereich des Innenvolumens V des Sensorkopfes 3 mit dem Füllmaterial 10, und zumindest einen weiteren Teilbereich des Innenvolumens V des Sensorkopfes 3 mit einem anderen, von dem Füllmaterial verschiedenen, Material zu füllen.

Bei dem Phasenübergang des Füllmaterials 10, also bei der Phasenübergangstemperatur T_{P}, ändert sich, insbesondere sprunghaft, zumindest eine charakteristische physikalische und/oder chemische Größe für das Füllmaterial 10. Anhand dieser Änderung kann der erste P₁ und/oder zweite Phasenzustand P₂ detektiert werden.

In Fig. 3 ist eine erfindungsgemäß Vorrichtung 1 mit einer Detektionseinheit 11 dargestellt, welche dazu ausgestaltet ist, den ersten P₁ und/oder zweiten Phasenzustand P₂ anhand einer Änderung der Leitfähigkeit des Füllmaterials 10 zu detektieren. Dabei ist der durch zumindest das Füllmaterial 10 gebildete Isolationswiderstand R_{I} ein Maß für die Leitfähigkeit, bzw. für das Vorhandensein des ersten P₁ und/oder zweiten Phasenzustands P₂.

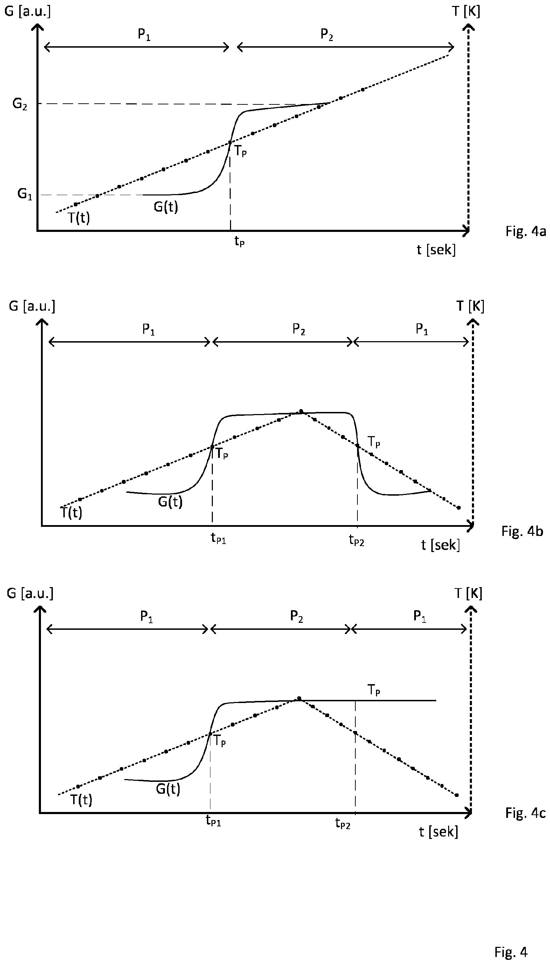

Es sei darauf verwiesen, dass im Rahmen der vorliegenden Erfindung eine separate Detektionseinheit 11 nicht zwingend notwendig ist. Einerseits kann eine Detektionseinheit Teil der Elektronik 4 sein. Andererseits ist in vielen Ausgestaltungen eine Detektionseinheit 11 nicht notwendig, beispielsweise im Falle einer passiven Detektion des jeweiligen Phasenzustands P₁ oder P₂ des Füllmaterials, oder eines Wechsels des Phasenzustands. Ebenfalls ist die in Fig. 3 und 4 illustrierte Detektion des Phasenübergangs anhand der Leitfähigkeit lediglich exemplarisch zu verstehen. Vielmehr können auch andere charakteristische physikalische oder chemische Größen des Füllmaterials 10 zur Detektion des Phasenübergangs herangezogen werden.

In Fig. 4a ist schließlich ein beispielhafter schematisch der Verlauf einer charakteristischen Größe G, beispielsweise der Leitfähigkeit, des Füllmaterials 10 sowie die Temperatur T der Vorrichtung 1, jeweils in willkürlichen Einheiten sowie als Funktion der Zeit G(t), T(t) dargestellt. Bei der Phasenübergangstemperatur T_{P} erfolgt eine sprunghafte Änderung der Größe G. Gemäß Fig. 4a ändert sich die Größe G bei der Phasenübergangstemperatur T_{P} von einem ersten Wert G₁ auf einen zweiten, höheren Wert G₂. Für Temperaturen T<T_{P} befindet sich das Füllmaterial dabei im ersten Phasenzustand P₁, und für Temperaturen T>Tp im zweiten Phasenzustand P₂.

Es versteht sich von selbst, dass in anderen Ausgestaltungen bei der Phasenübergangstemperatur T_{P} aber gleichermaßen auch eine Verringerung der Größe G von einem ersten G₁ auf einen zweiten geringeren Wert G₂ auftreten kann. Auch ist es denkbar, dass für das Füllmaterial 10 mehrere Phasenübergänge bei unterschiedlichen Phasenübergangstemperaturen T_{P} auftreten können. Beispielsweise kann mittels eines geeignet ausgestalteten Füllmaterials 10, bei welchem zwei Phasenübergänge auftreten, sowohl das Überschreiten einer vorgebbaren ersten Temperatur entsprechend einer ersten Phasenübergangstemperatur eines ersten Phasenübergangs und das Unterschreiten einer vorgebbaren zweiten Temperatur entsprechend einer zweiten Phasenübergangstemperatur eines zweiten Phasenübergangs ermittelt werden. Im Falle der Berücksichtigung mehrerer Phasenübergänge können dabei zumindest zwei Phasenübergänge anhand derselben charakteristischen Größe G als auch zumindest zwei Phasenübergänge anhand zwei unterschiedlichen charakteristischen Größen G detektiert werden. Es sei schließlich ebenfalls darauf verwiesen, dass neben den genannten Ausgestaltungen zahlreiche weitere Ausgestaltungen denkbar sind, welche allesamt unter die vorliegende Erfindung fallen.

In den Figuren Fig. 4b und Fig 4c sind schließlich jeweils schematisch das Verhalten der charakteristischen Größe G bei einem reversiblen (Fig. 4b) und einem irreversiblen (Fig. 4c) Phasenübergang dargestellt. Überschreitet die Temperatur T zu einem ersten Zeitpunkt t_{P1} die Phasenübergangstemperatur T_{P}, so ändert sich die Größe G bei der Phasenübergangstemperatur T_{P} von einem ersten Wert G₁ auf einen zweiten, höheren Wert G₂. Dabei befindet sich für Temperaturen T<T_{P} das Füllmaterial 10 im ersten Phasenzustand P₁, und für Temperaturen T>T_{P} im zweiten Phasenzustand P₂. Bei einem anschließenden Abstieg der Temperatur T derart, dass die Temperatur zum zweiten Zeitpunkt t_{P2} die Phasenübergangstemperatur wieder unterschreitet, nimmt die Größe G im Falle eines reversiblen Zustands für Temperaturen T<T_{P} wieder den ersten Wert G₁ an (vgl. Fig. 4b). Im Falle eines irreversiblen Phasenübergangs dagegen behält sie den zweiten Wert G₂ (vgl. Fig. 4c). Im Falle eines irreversiblen Phasenübergangs kann also allein anhand einer Detektion des zweiten Werts G2 für die charakteristische Größe G auf das Auftreten eines Phasenübergangs rückgeschlossen werden.

### Bezugszeichenliste

- 1: Vorrichtung in Form eines Thermometers
- 2: Schutzrohr
- 3: Sensorkopf
- 4: Elektronik
- 5: Medium
- 6: Füllstoff
- 7: Sensorelement in Form eines Temperatursensors
- 8: Widerstandselement
- 9, 9a, 9b: Anschlussdrähte
- 10: Füllmaterial
- 11: Detektionseinheit
- 12a,12b: Anschlussleitungen

- G: charakteristische Kenngröße des Füllmaterials
- T: Temperatur
- t: Zeit
- T_{P}: Phasenübergangstemperatur
- t_{P}, t_{P1}, t_{P2}: Phasenübergangs-Zeitpunkt
- P₁, P₂: Erster, zweiter Phasenzustand
- G₁, G₂: Erster, zweiter Wert für die charakteristische Größe

## Patentansprüche

1. Vorrichtung (1) zur Bestimmung und/oder Überwachung einer Prozessgröße eines Mediums (5) umfassend zumindest ein in einem Sensorkopf (3) angeordnetes Sensorelement (7) zur Bestimmung und/oder Überwachung der Prozessgröße,
wobei zumindest ein Teilbereich eines Innenvolumens (V) des Sensorkopfes (3), in welchem das Sensorelement (7) angeordnet ist vollständig mit einem Füllstoff (6) derart gefüllt ist, dass das Sensorelement (7) durch den Füllstoff (6) innerhalb des Volumens (V) des Sensorkopfes (3) eingeschlossen und/oder gekapselt ist,
wobei der Füllstoff (6) zumindest ein Füllmaterial (10) umfasst, für welches bei zumindest einer vorgebbaren Phasenübergangstemperatur (T_{P}) ein Phasenübergang auftritt, für welchen Phasenübergang das Material in der festen Phase verbleibt,
wobei sich das Füllmaterial (10) in einem ersten Phasenzustand (P₁) befindet, falls eine Temperatur (T) des Füllmaterials (10) kleiner als die Phasenüberganstemperatur (T_{P}) ist, und wobei sich das Füllmaterial (10) in einem zweiten Phasenzustand (P₂) befindet, falls die Temperatur (T) des Füllmaterials (10) größer als die Phasenüberganstemperatur (T_{P}) ist
wobei das Füllmaterial (10) in dem ersten Phasenzustand (P₁) ein elektrischer Isolator ist.

2. Vorrichtung (1) nach Anspruch 1,
wobei die Vorrichtung (10) dazu ausgestaltet ist zu detektieren, ob sich das Füllmaterial (10) in dem ersten Phasenzustand (P₁) oder in dem zweiten Phasenzustand (P₂) befindet, insbesondere, wobei die Vorrichtung (1) eine Detektionseinheit (11) umfasst, welche dazu ausgestaltet ist zu detektieren, ob sich das Füllmaterial (10) in dem ersten Phasenzustand (P₁) oder in dem zweiten Phasenzustand (P₂) befindet.

3. Vorrichtung (1) nach Anspruch 1 oder 2,
wobei es sich bei dem Sensorelement (7) um einen Temperatursensor handelt, insbesondere umfassend ein Widerstandselement (8) oder ein Thermoelement.

4. Vorrichtung (1) nach zumindest einem der vorherigen Ansprüche,
wobei das Füllmaterial (10) derart gewählt ist, dass eine Phasenübergangstemperatur (T_{P}) des Füllmaterials (10) einer vorgebbaren maximalen Einsatztemperatur oder einer vorgebbaren minimalen Einsatztemperatur, insbesondere einer maximal zulässigen Einsatztemperatur oder einer minimal zulässigen Einsatztemperatur, für die Vorrichtung (1) entspricht.

5. Vorrichtung (1) nach zumindest einem der Ansprüche 2-4,
wobei die Vorrichtung (1), insbesondere die Detektionseinheit (11), dazu ausgestaltet ist, im Falle des Auftretens des ersten (P₁) und/oder zweiten Phasenzustands (P₁) des Füllmaterials (10) eine Meldung darüber auszugeben, ob die vorgebbare maximale Einsatztemperatur für die Vorrichtung (1) überschritten worden ist.

6. Vorrichtung (1) nach zumindest einem der vorherigen Ansprüche,
wobei sich bei dem Phasenübergang des Füllmaterials (10) eine charakteristische physikalische und/oder chemische Größe (G) für das Füllmaterial (10), insbesondere sprunghaft, ändert, und wobei die Detektionseinheit dazu ausgestaltet ist, den ersten und/oder zweiten Phasenzustand anhand einer Änderung dieser Größe (G) zu detektieren.

7. Vorrichtung (1) nach zumindest einem der vorherigen Ansprüche,
wobei sich bei dem Phasenübergang des Füllmaterials (10) die elektrische Leitfähigkeit des Füllmaterials (10) ändert, und wobei die Vorrichtung (1), insbesondere die Detektionseinheit (11), dazu ausgestaltet ist, den ersten (P₁) und/oder zweiten Phasenzustands (P₁) anhand einer Änderung der elektrischen Leitfähigkeit zu detektieren.

8. Vorrichtung (1) nach Anspruch 6 oder 7,
wobei ein durch das Füllmaterial (10) gebildeter Isolationswiderstands (R_{I}) ein Maß für die elektrische Leitfähigkeit und für das Vorhandensein des ersten (P₁) oder des zweiten Phasenzustands (P₂) ist,
und wobei die Vorrichtung (1), insbesondere die Detektionseinheit (11), dazu ausgestaltet ist, die Änderung der elektrischen Leitfähigkeit anhand des durch das Füllmaterial (10) gebildeten Isolationswiderstands (R₁) zu detektieren.

9. Vorrichtung (1) nach zumindest einem der vorherigen Ansprüche,
wobei das Füllmaterial (10) in dem ersten Phasenzustand (P₁) in Form eines Pulvers vorliegt.

10. Vorrichtung (1) nach zumindest einem der vorherigen Ansprüche,
wobei der Phasenübergang des Füllmaterials (10) irreversibel ist.

11. Vorrichtung (1) nach Anspruch 10,
wobei es sich bei dem Füllmaterial (10) um Diamant handelt.

12. Verfahren zur Zustandsüberwachung einer Vorrichtung (1) zur Bestimmung und/oder Überwachung einer Prozessgröße eines Mediums (5) nach zumindest einem der vorherigen Ansprüche 1 bis 11, umfassend folgende Verfahrensschritte:
Detektieren ob sich das Füllmaterial (10) in dem ersten (P₁) oder dem zweiten Phasenzustand (P₁) befindet, und
Ermitteln eines Zustandsindikators für die Vorrichtung (1), insbesondere anhand des ersten (P₁) und/oder zweiten Phasenzustands (P₁).

13. Verfahren nach Anspruch 12,
wobei der Zustandsindikator anhand zumindest einer, insbesondere sprunghaften, Änderung zumindest einer charakteristischen physikalischen und/oder chemischen Größe (G) für das Füllmaterial (10) ermittelt wird.

14. Verfahren nach Anspruch 12 oder 13,
wobei es sich bei dem Zustandsindikator um eine Aussage über eine thermische Beanspruchung der Vorrichtung (1), insbesondere des Sensorelements (7), handelt.

## Claims

1. Device (1) for determining and/or monitoring a process variable of a medium (5), comprising at least one sensor element (7) arranged in a sensor head (3) for determining and/or monitoring the process variable,
wherein at least a partial region of an inner volume (V) of the sensor head (3), in which the sensor element (7) is arranged, is completely filled with a filler (6) in such a way that the sensor element (7) is enclosed in within and/or encapsulated by the filler (6) within the volume (V) of the sensor head (3),
wherein the filler (6) comprises at least one filler material (10), for which a phase transition occurs at at least one predeterminable phase transition temperature (T_{P} ), for which phase transition the material remains in the solid phase, wherein the filler material (10) is in a first phase state (P₁ ), if a temperature (T) of the filling material (10) is less than the phase transition temperature (T_{P} ), and wherein the filling material (10) is in a second phase state (P₂ ) if the temperature (T) of the filling material (10) is greater than the phase transition temperature (T_{P} ),
wherein the filling material (10) is an electrical insulator in the first phase state (P₁).

2. Device (1) according to claim 1,
wherein the device (10) is embodied to detect, whether the filling material (10) is in the first phase state (P₁) or in the second phase state (P₂) , in particular, wherein the device (1) comprises a detection unit (11) which is embodied to detect whether the filling material (10) is in the first phase state (P₁ ) or in the second phase state (P₂ ).

3. Device (1) according to claim 1 or 2,
wherein the sensor element (7) is a temperature sensor, in particular comprising a resistance element (8) or a thermocouple.

4. Device (1) according to at least one of the preceding claims,
wherein the filling material (10) is selected such that a phase transition temperature (T_{P} ) of the filling material (10) corresponds to a predeterminable maximum operating temperature or a predeterminable minimum operating temperature, in particular a maximum permissible operating temperature or a minimum permissible operating temperature, for the device (1).

5. Device (1) according to at least one of claims 2 to 4,
wherein the device (1), in particular the detection unit (11), is embodied to output a message as to whether the predeterminable maximum operating temperature for the device (1) has been exceeded, in case the first (P₁ ) and/or second phase state (P₂ ) of the filling material (10) occurs.

6. Device (1) according to at least one of the preceding claims,
wherein a characteristic physical and/or chemical variable (G) for the filling material (10) changes, in particular abruptly, during the phase transition of the filling material (10), and wherein the detection unit is designed to detect the first and/or second phase state on the basis of a change in this variable (G).

7. Device (1) according to at least one of the preceding claims,
wherein the electrical conductivity of the filling material (10) changes during the phase transition of the filling material (10), and wherein the device (1), in particular the detection unit (11), is embodied to detect the first (P₁ ) and/or second phase state (P₂) by means of a change in the electrical conductivity.

8. Device (1) according to claim 6 or 7,
wherein an insulation resistance (R_{I} ) formed by the filling material (10) is a measure of the electrical conductivity and of the presence of the first (P₁ ) or the second phase state (P₂ ), and wherein the device (1), in particular the detection unit (11), is embodied to detect the change in electrical conductivity on the basis of the insulation resistance (R_{I} ) formed by the filling material (10).

9. Device (1) according to at least one of the preceding claims,
wherein the filling material (10) is present in the first phase state (P₁ ) in the form of a powder.

10. Device (1) according to at least one of the preceding claims,
wherein the phase transition of the filling material (10) is irreversible.

11. Device (1) according to claim 10,
wherein the filling material (10) is diamond.

12. Method for monitoring the condition of a device (1) for determining and/or monitoring a process variable of a medium (5) according to at least one of the preceding claims 1 to 11, comprising the following method steps:
Detecting whether the filling material (10) is in the first phase state (P₁ ) or the second phase state (P₂ ), and
Determining a status indicator for the device (1), in particular using the first (P₁ ) and/or second phase status (P₂ ).

13. Process according to claim 12,
wherein the status indicator is determined on the basis of at least one, in particular sudden, change in at least one characteristic physical and/or chemical variable (G) for the filling material (10).

14. Method according to claim 12 or 13,
wherein the status indicator is a statement about a thermal load on the device (1), in particular on the sensor element (7).

## Revendications

1. Dispositif (1) pour déterminer et/ou surveiller une grandeur de processus d'un milieu (5) comprenant au moins un élément de détection (7) disposé dans une tête de détection (3) pour déterminer et/ou surveiller la grandeur de processus,
au moins une zone partielle d'un volume intérieur (V) de la tête de capteur (3), dans laquelle l'élément de capteur (7) est disposé, étant entièrement remplie d'une matière de remplissage (6) de telle sorte que l'élément de capteur (7) est enfermé et/ou encapsulé par la matière de remplissage (6) à l'intérieur du volume (V) de la tête de capteur (3),
la matière de remplissage (6) comprenant au moins une matière de remplissage (10), pour laquelle une transition de phase se produit à au moins une température de transition de phase (T_{P} ) pouvant être prédéfinie, pour quelle transition de phase la matière reste dans la phase solide, la matière de remplissage (10) se trouvant dans un premier état de phase (P₁ ), si une température (T) du matériau de remplissage (10) est inférieure à la température de transition de phase (T_{P} ), et la matière de remplissage (10) se trouvant dans un deuxième état de phase (P₂ ) si la température (T) de la matière de remplissage (10) est supérieure à la température de transition de phase (T_{P} ),
pour lequel le matériau de remplissage (10) est un isolant électrique dans le premier état de phase (P₁ ).

2. Dispositif (1) selon la revendication 1,
pour lequel le dispositif (10) est conçu pour détecter, si le matériau de remplissage (10) se trouve dans le premier état de phase (P₁ ) ou dans le deuxième état de phase (P₂ ) , en particulier, le dispositif (1) comprenant une unité de détection (11) qui est conçue pour détecter si le matériau de remplissage (10) se trouve dans le premier état de phase (P₁ ) ou dans le deuxième état de phase (P₂ ).

3. Dispositif (1) selon la revendication 1 ou 2,
pour lequel l'élément de détection (7) est un capteur de température, comprenant en particulier un élément de résistance (8) ou un thermocouple.

4. Dispositif (1) selon au moins l'une des revendications précédentes,
pour lequel le matériau de remplissage (10) est choisi de telle sorte qu'une température de transition de phase (T_{P} ) du matériau de remplissage (10) corresponde à une température d'utilisation maximale pouvant être prédéfinie ou à une température d'utilisation minimale pouvant être prédéfinie, en particulier à une température d'utilisation maximale admissible ou à une température d'utilisation minimale admissible, pour le dispositif (1).

5. Dispositif (1) selon au moins l'une des revendications 2 à 4,
pour lequel le dispositif (1), en particulier l'unité de détection (11), est conçu pour émettre, en cas d'apparition du premier (P₁ ) et/ou du deuxième état de phase (P₂ ) du matériau de remplissage (10), un message indiquant si la température d'utilisation maximale pouvant être prédéfinie pour le dispositif (1) a été dépassée.

6. Dispositif (1) selon au moins l'une des revendications précédentes,
pour lequel, lors de la transition de phase du matériau de remplissage (10), une grandeur physique et/ou chimique (G) caractéristique pour le matériau de remplissage (10) se modifie, en particulier brusquement, et où l'unité de détection est conçue pour détecter le premier et/ou le deuxième état de phase à l'aide d'une modification de cette grandeur (G).

7. Dispositif (1) selon au moins l'une des revendications précédentes,
pour lequel la conductivité électrique du matériau de remplissage (10) se change lors de la transition de phase du matériau de remplissage (10), et le dispositif (1), en particulier l'unité de détection (11), est conçu pour détecter le premier état de phase (P₁ ) et/ou le deuxième état de phase (P₂ ) à l'aide d'une modification de la conductivité électrique.

8. Dispositif (1) selon la revendication 6 ou 7,
pour lequel une résistance d'isolement (R_{I} ) formée par le matériau de remplissage (10) est une mesure de la conductivité électrique et de la présence du premier état de phase (P₁ ) ou du second état de phase (P₂ ),
et le dispositif (1) , en particulier l'unité (11) de détection, est conçu pour détecter la variation de la conductivité électrique à l'aide de la résistance (R_{I} ) d'isolement formée par le matériau (10) de remplissage.

9. Dispositif (1) selon au moins l'une des revendications précédentes,
pour lequel le matériau de remplissage (10) se présente sous la forme d'une poudre dans le premier état de phase (P₁ ).

10. Dispositif (1) selon au moins l'une des revendications précédentes,
pour lequel la transition de phase du matériau de remplissage (10) est irréversible.

11. Dispositif (1) selon la revendication 10,
pour lequel le matériau de remplissage (10) est du diamant.

12. Procédé de surveillance de l'état d'un dispositif (1) de détermination et/ou de surveillance d'une grandeur de processus d'un milieu (5) selon au moins l'une des revendications précédentes 1 à 11, comprenant les étapes de procédé suivantes:
détecter si le matériau de remplissage (10) se trouve dans le premier (P₁ ) ou le deuxième état de phase (P₂ ), et
déterminer un indicateur d'état pour le dispositif (1), notamment à l'aide du premier (P₁ ) et/ou du deuxième état de phase (P₂ ).

13. Procédé selon la revendication 12,
pour lequel l'indicateur d'état est déterminé à l'aide d'au moins une variation, notamment brusque, d'au moins une grandeur physique et/ou chimique caractéristique (G) pour le matériau de remplissage (10).

14. Procédé selon la revendication 12 ou 13,
pour lequel l'indicateur d'état est une information sur une sollicitation thermique du dispositif (1), en particulier de l'élément de détection (7).
